# EUROPÄISCHE PATENTANMELDUNG

(11) **EP 1 382 930 A2**
(43) Veröffentlichungstag der Anmeldung: **21.01.2004**
(21) Anmeldenummer: 03012857.3
(22) Anmeldetag: 06.06.2003
(51) Int. Cl.: F41A 25/04

(54) **Waffenrohrbremse**

(30) Priorität: 16.07.2002 DE 10232014
(71) Anmelder: Rheinmetall W & M GmbH, 29345 Unterlüss (DE)
(72) Erfinder: Urban, Klaus, Dr., 29225 Celle (DE)
(74) Vertreter: Dietrich, Barbara

(57) **Zusammenfassung**

Die Erfindung betrifft eine Waffenrohrbremse mit einem in einem Zylinder (2) verschiebbaren und mit der rücklaufenden Masse einer Waffe verbindbaren Bremskolben (3), der mindestens einen Durchströmkanal (8) aufweist, durch den bei der Bremsbewegung des Bremskolbens (3) die in einer ersten Kammer (5) befindliche Bremsflüssigkeit (7) in eine zweite Kammer (6) gepreßt wird, wobei es sich bei der Bremsflüssigkeit (7) um ein magnetorheologisches oder elektrorheologisches Fluid handelt, dessen Viskosität veränderbar ist.

Um zu erreichen, daß die Waffenrohrbremse (1) eine genau vorgebbare Bremswirkung aufweist, schlägt die Erfindung vor, die ittel (9) zur Viskositätssteuerung beweglich im Bremskolben (3) im Bereich des Durchströmkanals (8) anzuordnen.

## Beschreibung

Die Erfindung betrifft eine Waffenrohrbremse mit einem in einem Zylinder verschiebbaren und mit der rücklaufenden Masse einer Waffe verbindbaren Bremskolben, der mindestens einen Durchströmkanal aufweist, durch den bei der Bremsbewegung des Bremskolbens die in einer ersten Kammer befindliche Bremsflüssigkeit in eine zweite Kammer gepreßt wird.

Eine derartige Waffenrohrbremse wird beispielsweise in dem von der Firma Rheinmetall GmbH herausgegebenen Buch: "Waffentechnisches Taschenbuch", 7. Auflage, Düsseldorf 1985, auf Seite 441 beschrieben. Nachteilig bei dieser bekannten Rohrbremse ist unter anderem, daß die Bremskräfte gleichartiger Rohrbremsen häufig voneinander abweichen. Dadurch treten bei Verwendung mehrerer parallel zueinander an dem jeweiligen Waffenrohr angeordneter Rohrbremsen Bremskraftdifferenzen auf, die zu einem Abweichen der Rohrachse von der Ideallinie (Ziellinie) führen und damit das Treffbild negativ beeinflussen können.

Aus der DE 198 32 495 C1 ist eine Waffenrohrbremse bekannt, bei der als Bremsflüssigkeit ein magnetorheologisches oder elektrorheologisches Fluid verwendet wird, dessen Viskosität veränderbar ist. Hierzu sind die zur Viskositätssteuerung des Fluids erforderlichen Mittel (Magnetspulen oder Elektroden) ortsfest entlang dem Zylinder, in dem sich der Bremskolben befindet, angeordnet.

Diese bekannte Waffenrohrbremse weist unter anderem den Nachteil auf, daß die ortsfesten Magnete oder Elektroden sehr großvolumig auf das Fluid wirken. Wenn sich der metallische Bremskolben daher nach dem Abschuß des entsprechenden Geschosses mit hoher Geschwindigkeit durch dieses Feld bzw. durch die Feldlinien bewegt, kommt es zu einer entsprechend großvolumigen "Flußverdrängung". Diese hat ein schwer zu beherrschendes, instationäres und sich gegenseitig interferierendes elektromagnetisches-hydrodynamisch gekoppeltes Feld (Induktion, Selbstinduktion) zur Folge. Es ist daher außerordentlich schwierig, eine reproduzierbare Viskosität der Bremsflüssigkeit einzustellen. Vielmehr stellt sich die Viskosität aufgrund stochastischen Gesetzmäßigkeiten ein, so daß in der Regel auch in diesem Fall bei Verwendung von z.B. zwei seitlich gegenüberliegenden Rohrbremsen unterschiedliche Kräfte auf das entsprechende Waffenrohr wirken.

Ausgehend von der DE 198 32 495 C1 liegt der Erfindung die Aufgabe zugrunde, eine Waffenrohrbremse anzugeben, die eine genau vorgebbare Bremswirkung aufweist, so daß bei Verwendung mehrerer derartiger Waffenrohrbremsen Bremskraftdifferenzen auf einfache Weise ausgeregelt werden können.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, die Mittel zur Viskositätssteuerung nicht stationär entlang des Zylinders, sondern beweglich im Bremskolben im Bereich des Durchströmkanals anzuordnen.

Durch die lokale Wirkung eines mit dem Durchströmkanal sich bewegenden magnetischen oder elektrischen Feldes werden überraschenderweise die vorstehend beschriebenen Nachteile einer ortsfesten Spule oder Elektrode vermieden. Es besteht vielmehr die Möglichkeit einer feinfühligen, reproduzierbaren und auch vorbestimmbaren Steuerung bzw. Regelung des Fluidstromes.

Wird z.B. während der Abgabe mehrerer Schüsse eine Abweichung von dem Zielpunkt festgestellt, so kann vor Abgang des nächsten Schusses durch entsprechende Änderung der Viskosität der Bremsflüssigkeit in einer oder mehreren Rohrbremsen eine gleichmäßige Bremswirkung des gesamten Rohrbremssystems eingestellt werden.

Durch diese adaptronisch-hydraulische Regelung kann also die Abweichung der Rohrachse von der Ideallinie bei Verwendung mehrerer Rohrbremsen ohne großen zusätzlichen räumlichen Aufwand minimiert werden. Außerdem ist eine nachträgliche Modifikation vorhandener Geschütze möglich.

Weitere Einzelheiten und Vorteile der Erfindung ergeben sich aus dem folgenden anhand einer Figur erläuterten Ausführungsbeispiel.

In der Fig ist der Längsschnitt einer von zwei parallel zueinander angeordneter Waffenrohrbremsen 1 wiedergegeben. Die Waffenrohrbremse 1 umfaßt einen Zylinder 2 mit einem Bremskolben 3, welcher über eine Kolbenstange 4 mit dem Waffenrohr (nicht dargestellt) verbunden ist.

Der Bremskolben 3 trennt zwei Kammern 5 und 6, wobei die erste Kammer 5 mit einem magnetorheologischen Fluid 7 gefüllt ist. Die beiden Kammern 5, 6 sind über einen in dem Bremskolben 3 angeordneten Durchströmkanal 8 miteinander verbunden.

Im Bereich des Durchströmkanals 8 ist eine Magnetspule 9 in den Bremskolben 3 eingelassen, die über nur schematisch angedeutete elektrische Leitungen 10 von einer Steuereinrichtung 11 ansteuerbar ist. Dabei können die elektrischen Leitungen 10 zur Ansteuerung der Magnetspule 9 beispielsweise entlang der Kolbenstange 4 bis zu dem Bremskolben 3 verlaufen. Die Ansteuerung könnte auch in nicht dargestellter Weise per Telemetrie erfolgen.

Während des Abschußvorganges wird der Kolbenweg der jeweiligen Waffenrohrbremse 1 z.B. mittels eines an der Kolbenstange 4 angeordneten Sensors 12 gemessen. Stellt die Steuereinrichtung 11 z.B. zwischen zwei mit dem entsprechenden Waffenrohr verbundenen Rohrbremsen 1 einen etwas unterschiedlichen Bremsweg fest, so wird die Viskosität in einer oder in beiden Rohrbremsen in Abhängigkeit von der Wegdifferenz der Bremskolben der beiden Rohrbremsen durch die von der Steuereinrichtung 11 beaufschlagte Spule nahezu verzögerungsfrei verändert.

### Bezugszeichenliste

- 1: Waffenrohrbremse, Rohrbremse
- 2: Zylinder
- 3: Bremskolben
- 4: Kolbenstange
- 5: erste Kammer
- 6: zweite Kammer
- 7: Fluid, Bremsflüssigkeit
- 8: Durchströmkanal
- 9: Magnetspule, Mittel
- 10: elektrische Leitung
- 11: Steuereinrichtung
- 12: Sensor

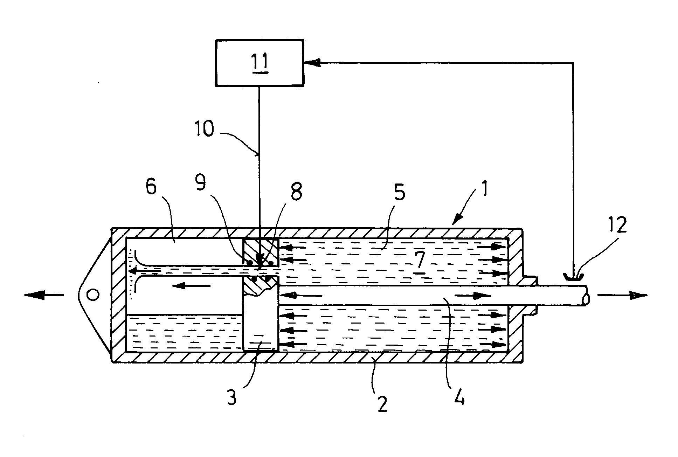

## Patentansprüche

1. Waffenrohrbremse mit einem in einem Zylinder (2) verschiebbaren und mit der rücklaufenden Masse einer Waffe verbindbaren Bremskolben (3), der mindestens einen Durchströmkanal (8) aufweist, durch den bei der Bremsbewegung des Bremskolbens (3) die in einer ersten Kammer (5) befindliche Bremsflüssigkeit (7) in eine zweite Kammer (6) gepreßt wird, mit den Merkmalen:
a) bei der Bremsflüssigkeit (7) handelt es sich um ein magnetorheologisches oder elektrorheologisches Fluid, dessen Viskosität veränderbar ist und
b) die zur Viskositätssteuerung des magnetorheologischen oder elektrorheologischen Fluids erforderlichen Mittel (9) sind im Bremskolben im Bereich des Durchströmkanals (8) angeordnet.
